# EUROPEAN PATENT APPLICATION

(11) **EP 2 423 826 A2**
(43) Date of publication of application: **29.02.2012**
(21) Application number: 11177661.3
(22) Date of filing: 16.08.2011
(51) Int. Cl.: G06F 13/38

(54) **Computer system, i/o device control method, and i/o drawer**

(30) Priority: 27.08.2010 JP 2010190765
(71) Applicant: Hitachi Ltd., Tokyo 100-8280 (JP)
(72) Inventor: Yoshimura, Chihiro, Tokyo, 100-8220 (JP)
(74) Representative: MERH-IP Matias Erny Reichl Hoffmann

(57) **Abstract**

To make it possible for multiple blades to share an SR-IOV device in the form that enables a hypervisor to acquire necessary information and to make a setting between itself and a PF. A computer system has multiple servers, an I/O device, an I/O switch for connecting these servers and the I/O device, and an I/O controller for managing the I/O switch, wherein the I/O device has one or more PF's, the I/O controller has a master PF driver for accessing the PF of the I/O device, the servers have respective slave PF drivers, these slave PF drivers transfer their requests to the master PF driver in order to use the PF of the I/O device, and the master PF driver accesses the PF of the I/O device as a proxy of the slave PF driver.

## Description

### FIELD OF THE INVENTION

The present invention relates to a blade server or computer system equipped with multiple computers, and more specifically, to a technology whereby a single I/O device is shared by multiple computers.

### BACKGROUND OF THE INVENTION

In order to increase aggregation of the computer system, the blade server and a virtual technology are being used. Improving the aggregation of the computer system leads to reduced power consumption, reduced space occupancy, or labor saving of management, and contributes to reduction in an introduction cost and an operation cost of the computer system.

The blade server has a configuration in which multiple blades each of which is with a processor (CPU, Central Processing Unit), main storage (memory), and a network interface card (NIC) mounted thereon and an I/O drawer with a network switch, a power supply, and an input/output (I/O) slot for expansion mounted thereon are housed in the same enclosure. In the blade server, since the blades can share the network switch, the power supply, and the I/O drawer, the aggregation increases.

A virtual technology is one that operates a single server as virtual machines (VM's) by dividing the server logically through making a virtual machine monitor (VMM) and a hypervisor operate on the server. Incidentally, in a subsequent explanation, the VMM or hypervisor is simply designated as the "hypervisor." Since the virtual technology enables a single server or blade to be used as multiple servers, the aggregation increases. Incidentally, an operating system (OS) that operates on the VM is designated as a "guest OS."

On the server to which the virtual technology is applied, multiple VM's are in operation on the single server. In order for the VM to communicate with other servers, it is necessary to use the NIC. Since the VM's try to use the respective NIC's separately, there arises a need for mounting the same number of the NIC's as the number of the VM's or more on the server. A system in which the NIC is directly allocated to the VM in this way is designated as a direct I/O system. However, since the number of the NIC's mounted on the server increases in the direct I/O system, it comes with disadvantages in respect of cost or space occupancy.

Because of this, a system in which the hypervisor provides a virtual NIC to the VM is used (hereinafter designated as a "virtual NIC system"). In the virtual NIC system, emulation by software provides the virtual NIC to the VM. The VM performs communication using the virtual NIC. The hypervisor realizes communication that the VM required the virtual NIC to perform using the NIC installed on the server. With this system, even if the server has only one NIC, the hypervisor can process communication requests from the VM's. Therefore, the increase in cost and space occupancy that became the problem with the direct I/O system can be avoided. However, there arise problems newly that the CPI resources are consumed for emulation for providing the virtual NIC and that the emulation cannot catch up with a high-speed network such as a 10-Gbit Ethernet (10GbE (registered trademark)).

From this background, a technology whereby problems of the cost and space occupancy that have become problems in the direct I/O system are avoided and at the same time whereby consumption of CPU resources that has become a problem in the virtual NIC system can also be avoided is being desired. As technologies of realizing this requirement, there are SR-IOV (Single Root I/O Virtualization) and MR-IOV (Multi Root I/O Virtualization) standardized by PCI-SIG (Peripheral Component Interconnect-Special Interest Group) (for example US7,058,738, US2010/0082874, US2009/0313391, and Single Root I/O Virtualization and Sharing Specification Revision 1.1, Chapter 1, Architectural Overview, pp. 11-24, September 2009, issued by PCI-SIG).

### SUMMARY OF THE INVENTION

The above-mentioned SR-IOV is providing a technology whereby multiple VM's operating on a single server share a single device. Further, the MR-IOV is providing a technology for enabling multiple VM's operating on multiple servers to share the single device, by expanding the SR-IOV.

By applying the SR-IOV, the aggregation of the server can be increased higher than a direct I/O system, without sacrificing performance like a virtual NIC system. By applying the MR-IOV, the aggregation of the server can be increased further more than the SR-IOV. However, since there is a problem that there are a small number of devices supporting the MR-IOV or they are expensive, its use has not spread in today's servers.

Then, there has so far been proposed technologies whereby multiple servers share the device that supports the SR-IOV (hereinafter referred to as an "SR-IOV device") like the MR-IOV does, such as are seen in US2010/0082874 and US2009/0313391

The technology described in US2010/0082874 realizes sharing of the SR-IOV device by connecting between the SR-IOV device and multiple servers with an I/O switch. The SR-IOV device has a single PF (Physical Function) and multiple VF's (Virtual Functions), and the VM's use the single SR-IOV shared device by the VF's being allocated to the VM. The technology described in US2010/0082874 realizes that not only the VM's on a single blade but also the VM's on multiple servers use the VF's by routing being performed within the switch according to VF allocation information that specifies allocation to the blade of the VF.

Here, since the SR-IOV device has the VF's, the VF can be directly allocated to the VM's. Specifically, the SR-IOV device has the VF's more than or equal to the number of servers that intend to share the SR-IOV device. However, there is often the case where only one PF usually exists or only a smaller number of those than the number of servers exist.

It is assumed in SR-IOV that the hypervisor uses the PF. The hypervisor computes a VF number being required based on the number of the VM's that itself generates, and makes a setting on a SR-IOV Capability that the PF has. In addition, by reading information stored in the SR-IOV Capability that the PF has, it also calculates a Bus number, a Device number, and a Function number that are identifiers being needed when the VF is used. Thus, the hypervisor acquires necessary information to allocate the VF of the SR-IOV device to the VM by controlling the PF.

However, like a description of US2010/0082874, even if the VF's are allocated to multiple servers, since the PF's do not exist as many as the number of the servers, there is a case where the PF's cannot be allocated to all the servers to which the VF's are allocated. In Fig. 2 of US2010/0082874, what can control the PF is only PCI-management HW having a PF driver. In such a case, the hypervisor can neither acquire necessary information for allocation of the VF to the VM nor make the setting by controlling the PF. Therefore, it becomes required to make the setting separately to the hypervisor and the PF. For that purpose, modification of the hypervisor becomes required, such as preparing an interface whereby the hypervisor is set up from the outside. Moreover, the setting from the outside takes time, which will increase a management cost.

On the other hand, US2009/0313391 describes a technology whereby multiple servers share the SR-IOV device while it realizes that the hypervisor communicates with the PF. Generally, in order for software operating on the server to access the device, the software uses a piece of software called a driver. A VF driver for accessing the VF is incorporated into the guest OS operating on the VM. Similarly, the hypervisor has the PF driver in order to communicate with the PF.

However, in the technology described in US2009/0313391, one of multiple blades shall be allocated as a master blade and the rest shall be allocated as slave blades. If the PF driver on the slave blade tries to access the device, the hypervisor on the slave blade will trap the access. Then, the hypervisor on the slave blade notifies the hypervisor on the master blade of a content that was trapped. Thereby, the single PF can be shared by the blades. However, in this method, a problem that the hypervisor needs to be modified still remains. Furthermore, since the hypervisor needs to trap the operation of the PF driver, there arises apprehension that it causes performance degradation.

Moreover, since a network is needed in order that the master blade and the slave blades may communicate with one another as shown in Fig. 1 of US2009/0313391, a configuration of the system becomes complicated, which poses a problem that an introduction cost and an operation cost increase.

Like the above-mentioned related example, there has so far been proposed a technology whereby the blades share the SR-IOV device. However, side effects, such as complicated management, necessity of modifying the hypervisor, have arisen.

The present invention has an object to provide a unit that enables multiple blades to share the SR-IOV device in the form that enables the hypervisor to acquire necessary information between itself and the PF and to make the setting without modifying the hypervisor

In order to attain the above-mentioned object, according to one aspect of the present invention, there is provided a computer system having multiple servers, each of which uses one or more I/O devices through an I/O drawer, and the computer system is configured so that the I/O drawer has an I/O switch for connecting the servers and the I/O device and an I/O controller for managing the I/O switch, the I/O device has at least one or more physical functions (hereinafter referred to as "functions"), any one of the servers or the I/O controller has a master PF driver for accessing the PF, the servers except the server having the master PF driver have respective slave PF drivers, the slave PF driver transfers a request to the master PF driver in order to use the PF, and the master PF driver having received the request accesses the PF.

Moreover, in order to attain the above-mentioned object, according to another aspect of the present invention, there is provided an I/O device control method of a computer system that has the servers using the I/O devices, the I/O switch for connecting the servers and the I/O device, and the I/O controller for managing the I/O switch, and the computer system is configured so that the I/O device has at least one or more PF's, any one of the servers or the I/O controller has the master PF driver for accessing the PF, the serves except the server having the master PF driver have respective slave PF drivers, the slave PF driver transfers a request to the master PF driver in order to use the PF, and the master PF driver having received the request accesses the PF.

Furthermore, in order to attain the above-mentioned object, according to still another aspect of the present invention, there is provided an I/O drawer that enables the servers to use a single ore more I/O devices, and the I/O drawer is configured so that it has the I/O switch for connecting the servers and the I/O device and the I/O controller for managing the I/O switch and the I/O switch has a mailbox accessible from the servers and the I/O switch.

The present invention makes it possible for the servers to share the I/O device having at least one PF. Especially, it has an effect of enabling the computer system to realize the sharing using an existing hypervisor.

### BRIEF DESCRIPTION OF THE DRAWINGS

Fig. 1 is a block diagram showing a general configuration of a computer system according to a first embodiment;
Fig. 2 is a conceptual diagram showing interaction between components in the computer system according to the first embodiment;
Fig. 3 is a block diagram showing one example of a configuration of an MSMB (Master-Slave Communication MailBox) according to the first embodiment;
Fig. 4 is a block diagram showing a general configuration of a computer system according to a second embodiment;
Fig. 5 is a block diagram showing one example of a configuration of an MIR (Master Identify Register) according to the second embodiment;
Fig. 6 is a flowchart showing an operation procedure for, when an MS-PF driver (a dual-purpose master/slave PF driver) according to the second embodiment detects a failure of the master role server, restoring from the failure;
Fig. 7 is a flowchart showing an operation procedure in order that a master PF driver according to the first embodiment may transmit a request to a slave PF driver via the MSMB;
Fig. 8 is a block diagram showing a general configuration of a computer system according to a third embodiment;
Fig. 9 is a flowchart explaining an operation of the master PF driver according to the first embodiment;
Fig. 10 is a flowchart explaining an operation of the slave PF driver according to the first embodiment; and
Fig. 11 is a flowchart for explaining an operation of the MS-PF driver according to the second embodiment.

### DETAILED DESCRIPTION OF THE PREFERRED EMBODIMENTS

Hereinafter, embodiments of the present invention will be described based on accompanying drawings. Incidentally, in all diagrams for explaining the embodiments, the same symbol is given to the same component, and a repeated explanation of the same symbol is omitted. In addition, in this specification, PF (Physical Function) and VF (Virtual Function) correspond to those of the SR-IOV that is a virtual support function in a device disclosed by the PCI-SIG described above.

### First Embodiment

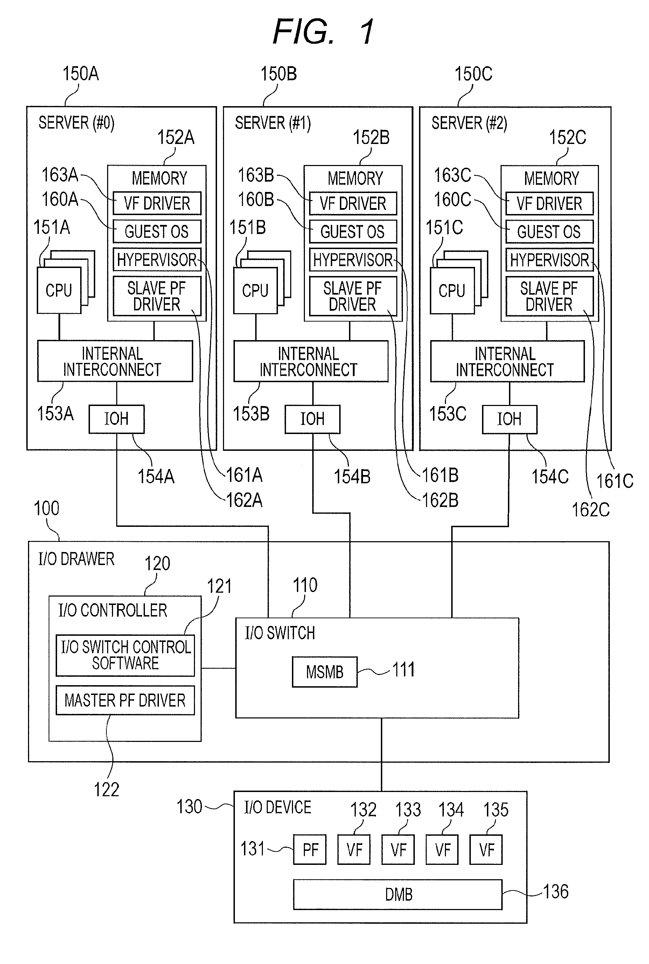

Fig. 1 is a diagram showing a general configuration of a computer system according to a first embodiment. The computer system in Fig. 1 includes multiple servers 150A-C, an I/O drawer 100, and an I/O device 130. Here, the I/O device 130 is shared by the servers 150A-C. The I/O drawer 100 has an I/O switch 110 for connecting the servers 150A-C and the I/O device 130, and an I/O controller 120 for controlling the I/O switch 110.

The I/O device 130 is a device for playing a role of input and output, for example like an NIC. The I/O device 130 consists of one PF 131, multiple VF's 132-135, which are illustrated as four, and a device mailbox (DMB, Device MailBox) 136 in the I/O device. The DMB 136 is a common register used as an area for a PF driver for controlling the PF 131 and the VF driver for controlling the VF's 132-135 to communicate with each other. In this embodiment, the PF drivers include a master PF driver and a slave PF driver, as will be described in detail later.

The server 150A-C has a CPU 151A-C made up of at least one central processing unit, memory 152A-C, and an input/output hub (IOH, I/O Hub) 154A-C. Moreover, these components are connected by internal interconnects 153A-C. For the internal interconnect 153A-C, an interface, for example like a HyperTransport (HT), is used. Therefore, each server will have a normal computer configuration.

On the server 150A-C, a hypervisor 161A-C is operating and generates a VM. A guest OS 160A-C operates on that VM. The hypervisor 161A-C has a slave PF driver 162A-C disclosed in this embodiment. The guest OS has a VF driver 163A-C. Incidentally, since all of the hypervisors 161A-C, the guest OS's 160A-C, the slave PF drivers 162A-C, and the VF drivers 163A-C are software performed by the CPU, these exist on the memory 152A-C.

The I/O device 130 and the I/O switch 110, and the I/O switch 110 and the IOH 154A-C are connected with interfaces in conformity to PCI Express standard decided by the PCI-SIG, respectively. The IOH 154A-C converts a memory write request or memory read request addressed to the I/O device 130 that the CPU 151A-C issues into a packet of PCI Express. Moreover, the IOH 154A-C receives a packet transmitted from the I/O device 130, and reads/writes the memory 152A-C.

As described above, the I/O drawer 100 is a device for connecting the I/O device 130 to the servers 150A-C. The I/O drawer consists of the I/O switch 110 and the I/O controller 120.

The I/O switch 110 is a switch for transferring a packet between the I/O server 150A-C and the I/O device 130. Moreover, the I/O switch 110 has a master-slave communication mailbox (MSMB; Master-Slave Communication MailBox) 111 used as a storage area for communication between the master and the slave disclosed in this embodiment.

Incidentally, the I/O controller 120 for controlling the I/O switch 110 in the I/O drawer 100 consists of a CPU and memory whose illustrations are omitted, like the server 150A-C.

Generally, a microcontroller on which the CPU and the memory are integrated in one chip is used. As shown in the figure, on the I/O controller 120, I/O switch control software 121 that is software for controlling the I/O switch 110 and a master PF driver 122 disclosed in this embodiment operate.

Connection between the I/O controller 120 and the I/O switch 110 is also realized by an interface in conformity to the PCI Express standard. Incidentally, in the case where the I/O switch 110 and the I/O controller 120 are constructed on the same LSI or substrate, an interface of an original standard can also be used.

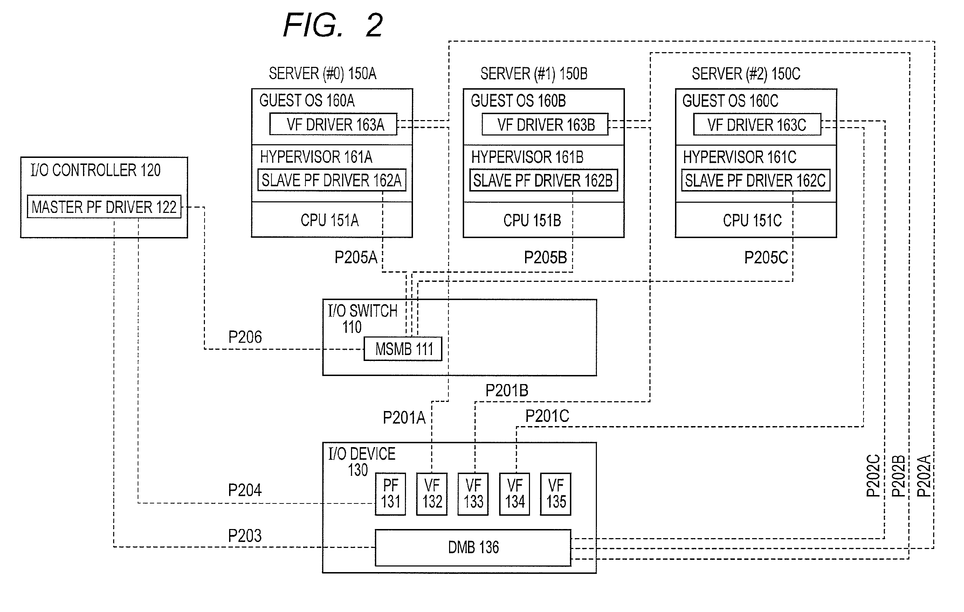

Fig. 2 is a conceptual diagram showing interaction between the software operating on the server 150A-C and the I/O controller 120, and the I/O device 130 in the computer system of the first embodiment. In the figure, each of broken lines P201-P206 shows existence of interaction between two components placed at both ends of the each broken line.

The VF driver 163A-C accesses the VF's 132-134 in order to perform communication in response to the request of the guest OS 160A-C (broken lines P201A-C). Thereby, the VM's of the servers can share a single SR-IOV device, without producing an overhead for emulation like a virtual NIC system.

The master PF driver 122 operating in the I/O controller 120 accesses the PF 131 in order to perform an overall control of the I/O device 130. What can access the PF 131 is only the master PF driver 122 in the computer system shown in Fig. 1 and Fig. 2 according to the first embodiment.

Although the VF driver 163A-C realizes a necessary operation for communication by accessing the VF 132-134, there is a case where it must access the PF 131 for a part of operations and a setting in connection with the entire I/O device 130. For example, in the NIC, there is a case where a setting of media access control (MAC) addresses, etc. may reside in jurisdiction of the PF 131. Then, in the computer system of this embodiment, the VF driver 163A-C requires the master PF driver 122 to perform the setting via the DMB 136 (P202A-C, P203). The master PF driver 122 accesses the PF 131, in order to realize the operation and the setting that were requested by the VF driver 163A-C (P204).

Although communication means between the VF driver and the PF driver is not defined by the standard of the SR-IOV, a mailbox consisting of common registers in a device like the DMB 136 is often used. In this embodiment, the DMB 136 is diverted for use as means of communication between the master PF driver 122 and the VF driver 163A-C.

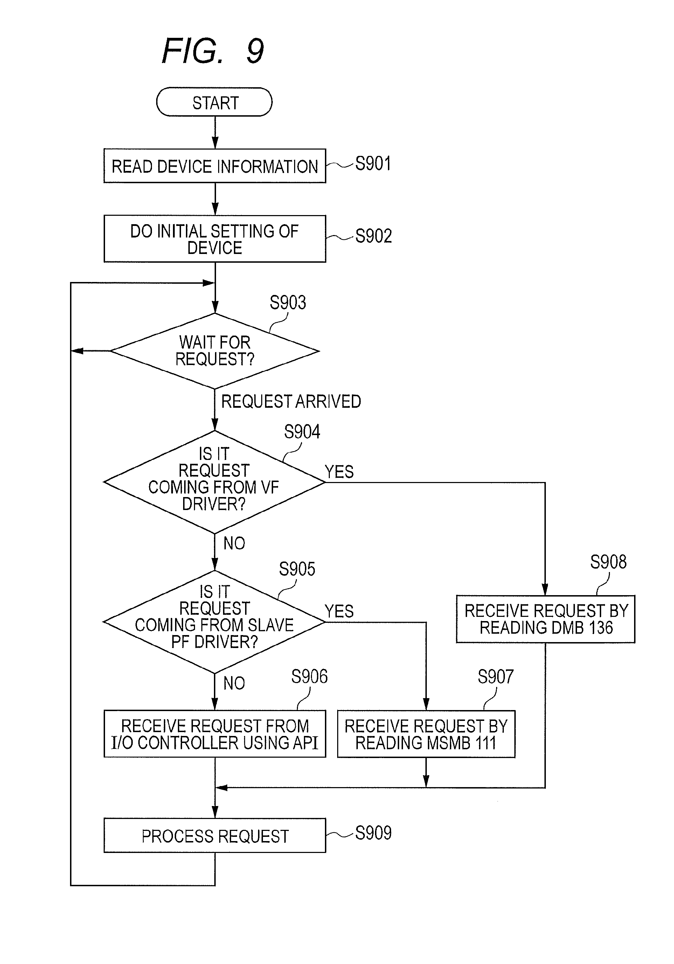

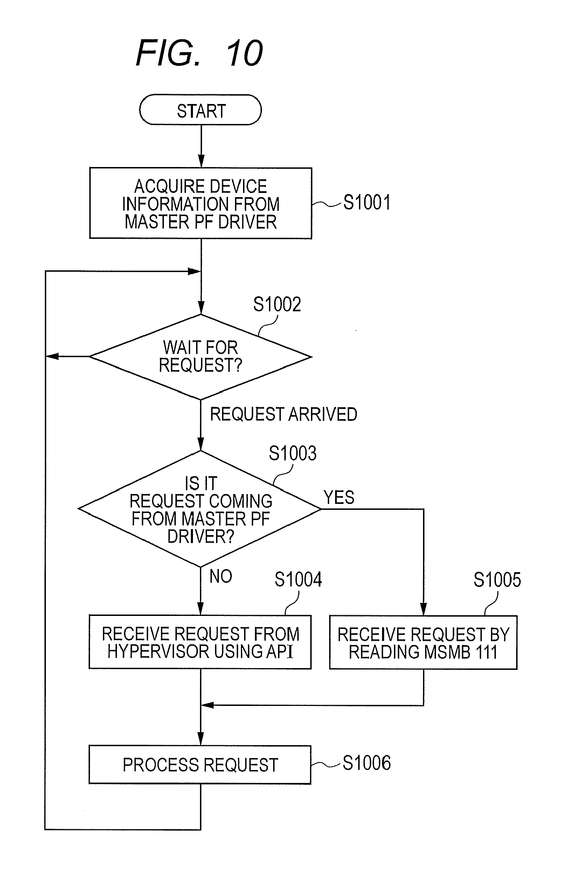

The slave PF driver 162A-C is a PF driver incorporated into a hypervisor 161A-C. Seeing from the hypervisor 161A-C, the slave PF driver 162A-C is indistinguishable from the related PF driver. When the hypervisor 161A-C performs a setting to the PF, for example, a setting of the SR-IOV Capability etc., it requests the slave PF driver 162A-C. The slave PF driver 162A-C does not perform a necessary control to fulfill the request from the hypervisor 161A-C directly to the PF 131. Instead, it requires the master PF driver 122 to perform the setting via the MSMB 111 (P205A-C, P206). The master PF driver 122 accesses the PF 131 in order to realize the operation and the setting that were required by the slave PF driver 162A-C (P204). Incidentally, one example of a specific configuration of the master PF driver 122 and the slave PF driver 162A-C will be explained later using Fig. 9 and Fig. 10.

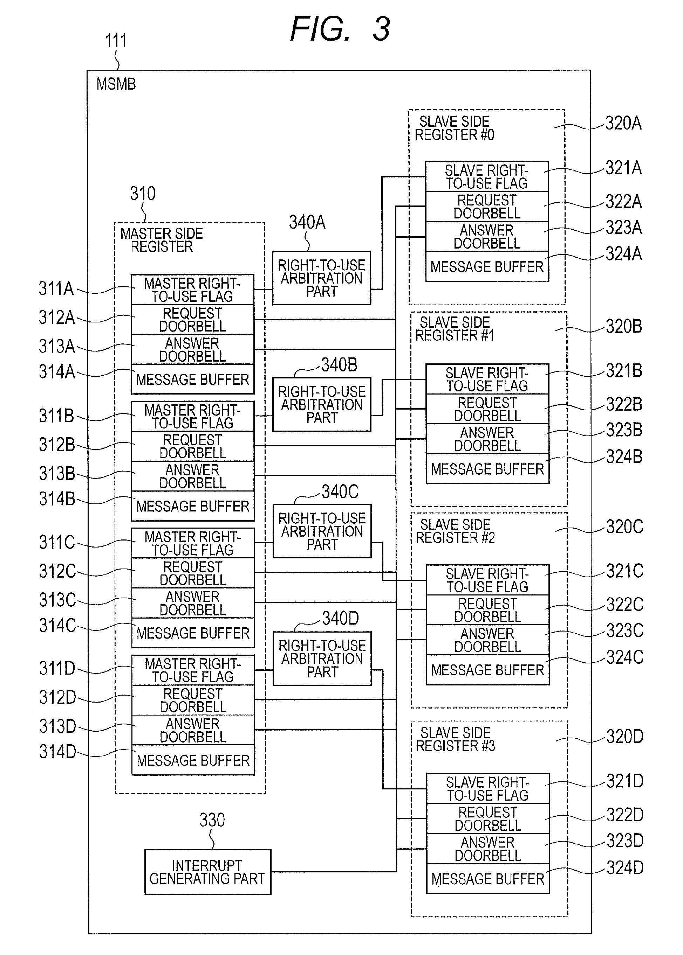

Fig. 3 is a block diagram showing a detailed configuration of one example of the MSMB 111 in the I/O switch 110 according to the first embodiment. The MSMB 111 consists of a register that is a storage area accessible from the master PF driver 122 (hereinafter designated as a "master side register") 310, a register that is a storage area accessible from the slave PF driver 162A-C (hereinafter designated as a "slave side register") 320A-D, a right-to-use arbitration part 340A-D, and an interrupt generating part 330.

Since the master side register 310 is accessed by the master PF driver 122, its quantity is unity. On the other hand, the slave side registers 320A-D become necessary as many as or more than the quantity of the slave PF drivers 162A-C contained in the entire system. In the example of the computer system of Fig. 1, since the hypervisors 161A-C are operating on three servers 150A-C, respectively, the number of the slave PF drivers 162A-C is three. Therefore, at least three slave side registers are necessary.

Since the I/O device 130 has four VF's 132-135 in the computer system of Fig. 1, four servers at the maximum can share the I/O device 130. In that case, since four slave PF drivers will exist in the entire system, in order to match this value, the MSMB 111 of Fig. 3 has four slave side registers 320A-D. Therefore, the slave side register 320D is not used and left over in the computer system according to the first embodiment shown in Fig. 1.

In this embodiment, the MSMB 111 is used in order that the master PF driver 122 can transmit a request to the slave PF driver 162A-C, or conversely that the slave PF driver 162A-C can transmit a request to the master PF driver 122. Therefore, it has message buffers 314A-D and 324A-D each for transmitting the request. The message buffer 314A-D of the master side register and the message buffer 324A-D of the slave side register are sharing the same storage area, respectively. For example, a content that was written in the message buffer 314A can be read from the message buffer 324A. Moreover, the content that was written in the message buffer 314B can also be read from the message buffer 314B. In a shared area like this, the master PF driver 122 and the slave PF driver 162A-C can transmit and receive a request mutually.

In order to transmit and receive a request using the message buffers 314A-C and 324A-D, a right (right to use) of writing it in the message buffer needs to be arbitrated between the master side and the slave side. Therefore, the MSMB 111 has master right-to-use flags 311A-D, slave right-to-use flags 321A-D, and right-to-use arbitration parts 340A-D.

The master right-to-use flag 311A-D with its content of unity indicates that the master PF driver 122 on the master side has a right to write in the message buffer. Incidentally, its initial value shall be zero that indicates having no right to use. Moreover, similarly, the slave right-to-use flag 321A-D with its content of unity indicates that the slave PF driver 162A-C on the slave side has the right to write in the message buffer. Also in this case, its initial value is zero that indicates having no right to use. Moreover, the master side and slave side rights to use must be exclusive. That is, when the master right-to-use flag 311A is unity, the slave right-to-use flag 321A is inevitably zero.

When the master PF driver 122 or the slave PF driver 162A-C tries to write unity in the master right-to-use flag 311A-D or the slave right-to-use flag 321A-D, the right-to-use arbitration part 340A-D allows the writing of unity only when the exclusivity of the right to use described above is maintained, otherwise does not allow the writing of unity. For example, when the master PF driver 122 writes unity in the master right-to-use flag 311A, if the content of the slave right-to-use flag 321A is zero, it can write it. If the content of the slave right-to-use flag 321A is unity, the writing in the master right-to-use flag 311A is ignored, and the content of the master right-to-use flag 311A remains at an initial value of zero.

After the master PF driver 122 or the slave PF driver 162A-D acquired the right to use of the message buffer and wrote the request in the message buffer, it needs to inform the party of its having written the request. For this purpose, the MSMB 111 has request doorbells 312A-D and 322A-D and the interrupt generating part 330.

When the request doorbell 312A-D or 322A-D is read by the master PF driver 122 or the slave PF driver 162A-D, the interrupt generating part 330 makes the interrupt generate in a corresponding party (hereinafter designated as a "request interrupt"). In the PCI Express, the interrupt is expressed by a packet like the writing in memory. For example, when the slave PF driver 162A wishes to issue a request to the master PF driver 122, the request doorbell 322A is read. When the request doorbell 322A is read, the interrupt generating part 330 generates the interrupt to the master PF driver 122. Incidentally, as a readout result of the request doorbell 322A, either unity indicating a success of interrupt generation or zero indicating a failure of the interrupt generation is obtained.

The master PF driver 122 or the slave PF driver 162A-D that received the interrupt request accepts the request by reading the content of the message buffer 314A-D or 324A-D. As a unit that informs a requester of its having completed the request after that, the MSMB 111 has response doorbells 313A-D and 323A-D. The response doorbells 313A-D and 323A-D are the doorbells each for generating the interrupt to the party like the request doorbells 312A-D and 322A-D. The interrupt generating part 330 enables an interrupt using an interrupt factor different between an interrupt resulting from the request doorbell and an interrupt resulting from the response doorbell (hereinafter, the interrupt resulting from the response doorbell is designated as the response interrupt). Thereby, the master PF driver 122 or the slave PF driver 162A-D can distinguish whether a request comes to itself from the party or a response to the request issued by it comes.

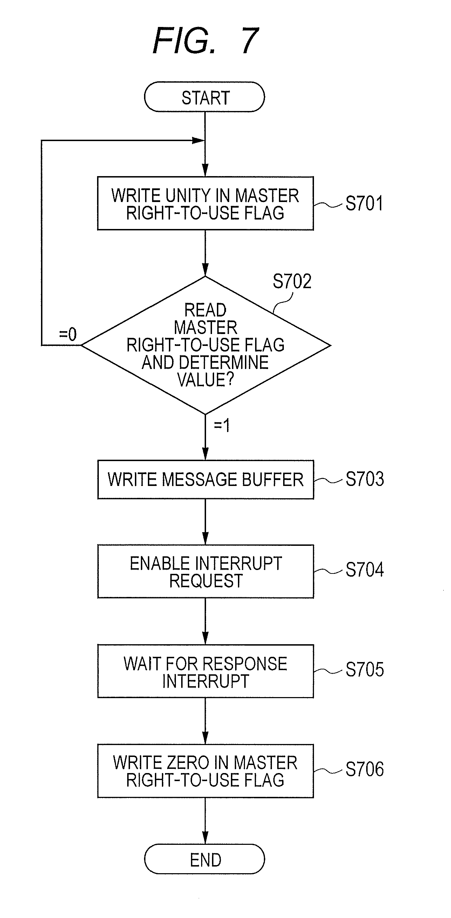

A procedure in which in the computer system according to the first embodiment, the master PF driver 122 or the slave PF driver 162A-D transmits the request to the party will be explained using Fig. 7. Incidentally, Fig. 7 shows a procedure by which the master PF driver 122 transmits a request to the slave PF driver 162A-D (hereinafter designated as a "request issued by the master"), but since the procedure by which the salver PF driver 162A-D transmits a request to the master PF driver 122 (hereinafter designated as a "request issued by the slave") is basically the same procedure as the above procedure, an explanation will be given in the form of supplementing Fig. 7.

At Step S701 of Fig. 7, in order to acquire the right to use of the message buffer 314A-D of the master side register 310, unity is written in the master right-to-use flag 311A-D. In the case of the request issued by the slave, in order to acquire the right to use of the message buffer 324A-D, unity is written in the slave right-to-use flag 321A-D.

At Step S702, in order to check whether the right to use has been acquired, the master right-to-use flag 311A-D is read. If unity can be read, it is assumed that the right to use is acquired and the flow proceeds to Step S703. If zero is read, since the right to use has not been acquired, Step S701 is repeated until the right to use is acquired. Incidentally, in the case of the request issued by the slave, the slave right-to-use flag 321A-D is read.

At Step S703, a message indicating the request is written in the message buffer 314A-D. Incidentally, in the case of the request issued by the slave, the message is written in the message buffer 324A-D.

At Step S704, in order to notify the slave PF driver 162A-D that the request was written at Step S703, a request interrupt is generated by the request doorbell 312A-D. Incidentally, in the case of the request issued by the slave, in order to notify the master PF driver 122, a request interrupt is generated by the request doorbell 322A-D.

At Step S705, it waits for a response interrupt indicating a response from the party to the request issued by itself. That is, the master PF driver 122 waits for the response interrupt that is generated by the slave PF driver 162A-D through the response doorbell 323A-D. Incidentally, in the case of the request issued by the slave, the slave PF driver 162A-D waits for a response interrupt that is generated by the master PF driver 122 though the response doorbell 313A-D.

At Step S706, in order to release the right to use of the message buffer 314A-D, zero is written in the master right-to-use flag 311A-D. Incidentally, in the case of the request issued by the slave, in order to release the right to use of the message buffer 324A-D, zero is written in the slave right-to-use flag 321A-D.

As described above, in the computer system of this embodiment, the master PF driver 122 can transmit the request to the slave PF driver 162A-D at Steps S701 to S706, or the slave PF driver 162A-D can transmit the request to the master PF driver 122.

Next, one specific example of the master PF driver 122 and the slave PF driver 162A-C used in this embodiment will be explained. As described above, the master PF driver 122 is realized by a program that is executed by the CPU that constitutes the I/O controller, and the slave PF driver 162A-C is realized as a program that is to be incorporated into the hypervisor 161A-C of the each server 150A-C, in other words, as a program operable on the hypervisor 161A-C.

Based on a flowchart of Fig. 9, one example of a specific operation of the master PF driver 122 of this embodiment will be explained. When activating on the I/O controller 120, the master PF driver 122 performs an operation shown in Fig. 9.

At Step S901, the master PF driver 122 reads information about the device from the PF 131 on the I/O device 130. The information about the device is, for example, the quantity of the VF's 132-135 that the I/O device 130 has and a parameter common to the device.

Next, at Step S902, an initial setting to the I/O device 130 is written in the PF 131 based on information about the I/O device 130 obtained at Step S901 and configuration information of the entire computer system. The content of the initial setting includes, for example, the quantity of the VF's used and, if it is the NIC, a setting of MAC addresses, etc.

Since the PF 131 and the VF's 132-135 of the I/O device 130 become available at stages of Step S901 to Step S902, the servers 150A-C are sequentially activated after this, and the servers start to use the respective VF's 132-135 of the I/O device 130. On each server, the slave PF driver 162A-C that will be explained later and the VF driver 163A-C operate.

The master PF driver 122 makes the setting to the I/O device 130 and reads information therefrom upon reception of a request from any one of the I/O controller 120 that operates itself, the slave PF drivers 162A-C, or the VF drivers 163A-C. Therefore, the master PF driver 122 is waiting for these requests at Step S903.

Since these requests are transmitted to the master PF driver 122 as the interrupts, it is necessary to identify the requester by analyzing an interrupt factor. When the request is found to be a request from the VF driver 163A-C at Step S904, in order to know details of the request, the DMB 136 in the I/O device 130 is read at Step S908. When the request is determined to be a request from the slave PF driver 162A-C at Step S905, similarly, in order to know details of the request, the MSMB 111 in the I/O switch 110 is read at Step S907.

Incidentally, when the request is neither a request from the VF driver 163A-C nor that from the slave driver PF 162A-C, it is a request from the I/O controller 120, and consequently, details of the request are obtained using the API (Application Programming Interface) defined between the I/O controller 120 and the master PF driver 122 at Step S906. For example, when the I/O controller 120 is operating under an operating system Linux (Linux is a registered trademark), an API provided for drivers of Linux serves as this API.

Now the master PF driver 122 could know the details of the request at any one of Steps S906 to S908, the master PF driver 122 performs a processing for realizing the request at Step S909. As described earlier, in this embodiment, this processing can be achieved by the setting to the PF 131 of the I/O device 130, information reading, or communication using the MSMB 111, the DMB 136, or the API.

Next, based on a flowchart of Fig. 10, one example of a specific operation of the slave PF driver 162A-C of this embodiment will be explained. As described above, after the master PF driver 122 activated, the slave PF driver 162A-C activates.

First, in the figure, information about the I/O device 130 is acquired from the master PF driver 122 having already been activated at Step S1001. The slave PF driver 162A-C passes information that the hypervisor 161A-C needs among acquired pieces of information to the hypervisor 161A-C using the API defined between the hypervisor 161A-C and the slave PF driver 162A-C.

After that, the flow enters into waiting for a request at Step S1002 like the case of the master PF driver 122. Incidentally, there is a possibility that the slave PF driver 162A-C may receive a request from the hypervisor 161A-C or the master PF driver 122. A request is not directly issued between the slave PF driver 162A-C and the hypervisor 161A-C, but is certainly done with an intervention of the master PF driver 122. Moreover, any request is not directly issued from the VF driver 163A-C to the slave PF driver 162A-C, but is certainly done with an intervention of the master PF driver 122.

Therefore, if the request can be determined to be a request from the master PF driver 122 at Step S1003, the MSMB 111 of Fig. 3 is read at Step S1005 and a content of the request from the master PF driver 122 is acquired. Otherwise, since it is a request from the hypervisor 161A-C, the content of the request is acquired using the API described above.

At Step S1006, a processing for realizing these contents of the requests is performed. The slave PF driver 162A-C does not directly access the PF 131 or the VF 132-135 of the I/O device 130. Instead, the processing is realized by requiring the hypervisor 161A-C using the API, or requiring the master PF driver 122 via the MSMB 111.

That is, the slave PF driver 162A-C of this embodiment either transfers the request from the hypervisor 161A-C to the master PF driver 122 via the MSMB 111 or transfers the request from the master PF driver 122 to the hypervisor 161A-C via the API.

As described above, in this embodiment, the problem is aimed at being solved by introducing new configurations to the PF driver and the I/O switch. Since the PF driver is used being incorporated into the hypervisor and needs to be developed for each driver, an environment necessary to develop the PF driver has already been prepared, and it is easy to incorporate a new processing in this embodiment into the PF driver; therefore, increases in necessity of modifying the hypervisor, an introduction cost, or an operation and management cost can be suppressed. Second Embodiment

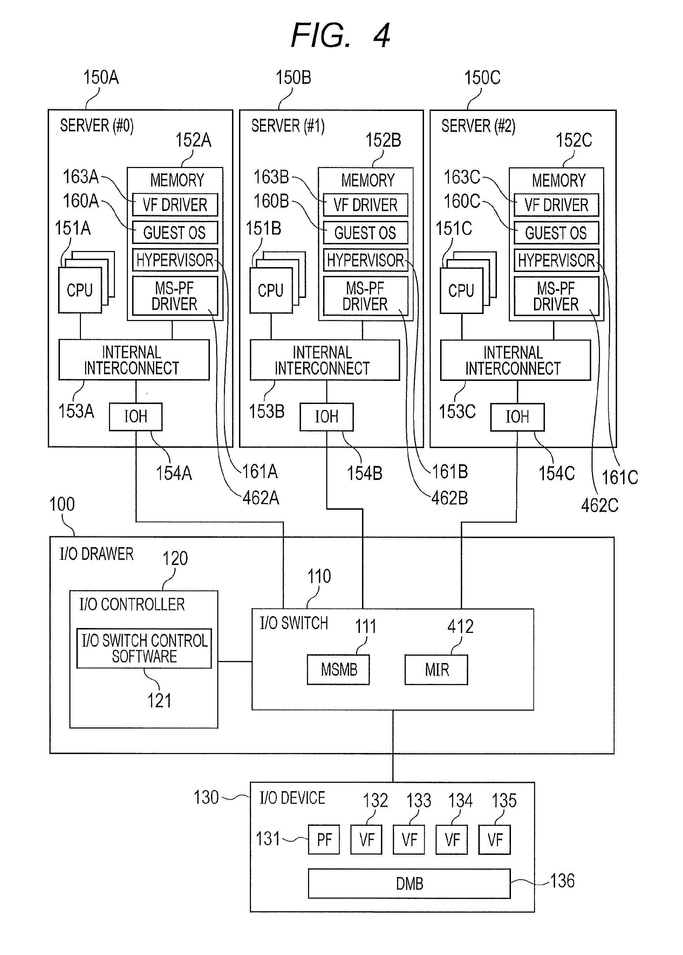

Fig. 4 is a diagram showing a general configuration of a computer system according to a second embodiment. In the computer system of the second embodiment shown in Fig. 4, instead of mounting the master PF driver 122 on the I/O controller 120, a dual-purpose master/slave PF driver (hereinafter designated as an "MS-PF driver") 462A-C that is disclosed in this embodiment is mounted on all the servers 150A-C.

The MS-PF driver 462A-C is a driver that serves both as the master PF driver and the slave PF driver, and it is decided as which of the master PF driver or the slave PF driver it operates at the time of activation. Incidentally, in this specification, a mode of the MS-PF operating as the master PF driver is designated as "operating in the master mode," and a mode of the MS-PF operating as the slave PF driver is designated as "operating in the slave mode." One example of a specific configuration of this MS-PF driver will be explained in detail later.

In the first embodiment, the master PF driver 122 was operated on the I/O controller 120. However, the master PF driver 122 can be a factor of one point failure. Therefore, in order to attain higher reliability, it is necessary to make the I/O controller 120 have a redundant configuration. On the other hand, in this embodiment, a redundant configuration is realized by making the MS-PF driver capable of functioning as both the master PF driver and the slave PF driver on the server 150A-C.

That is, among the servers 150A-C on the computer system of Fig. 4, the master PF driver, i.e., the MS-PF driver in the master mode is operated by a single server, and the slave PF driver, i.e., the MS-PF driver in the slave mode is operated in the other servers. Then, when the server that is operating the master PF driver breaks down, one server among the other servers in each of which the slave PF driver is operating takes over a role as the master PF driver. Therefore, the computer system of this embodiment is configured to newly introduce the MS-PF drivers 462A-C each capable of operating both as the slave PF driver but and as the master PF driver.

In this embodiment, one example of an allocation policy as to which MS-PF driver becomes in the master mode among the MS-PF drivers 462A-C in Fig. 4 will be shown below. When the server in the master mode becomes absent, the MS-PF driver on a server whose server number is the youngest among the servers in operation becomes in the master mode, and the MS-PF drivers on the other servers shall operate in the slave mode.

Since switching between the master mode and the slave mode is performed when the server in the master mode becomes absent, the server with the youngest server number is not always in the master mode among the servers in operation. For example, if a failure occurs in the server 150A (server number #0) when the server 150A is in operation in the master mode and the server 150B (server number #1) is in operation in the slave mode, the server 150B will switch to operate in the master mode by the changing described above because the server in the master mode becomes absent. After that, when the server 150A is restored from the failure to be activated, the server with the youngest server number becomes the server 150A, but the change of master mode and the slave mode does not occur because the server in the master mode is not absent, in other words, the server 150B continues to work as in the master mode.

The computer system shall be configured so that a master identity register (MIR) 412 functioning as a master role decision area in the I/O switch 110 is introduced as a mechanism of deciding a server that will operate in the master mode and making a next master role server take over a processing in the event of failure occurrence in the server operating in the master mode.

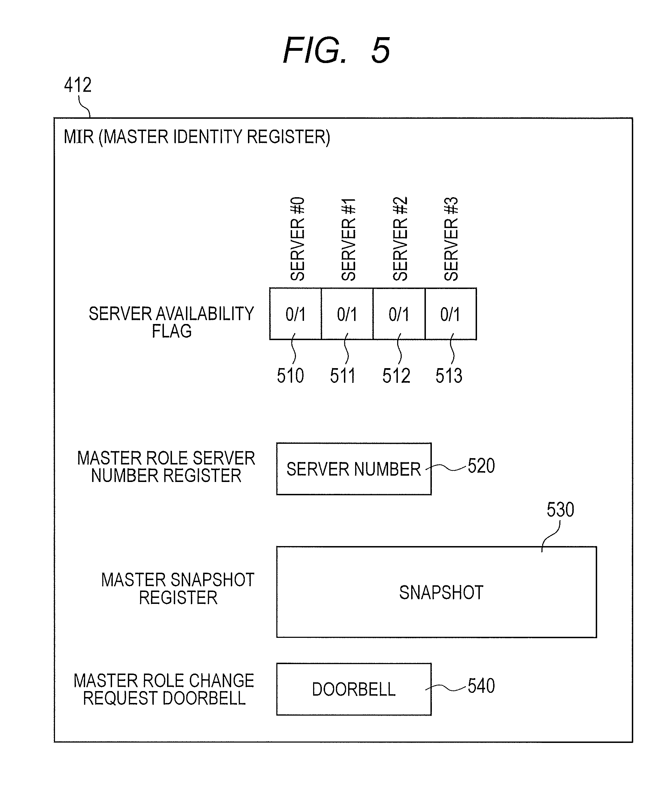

Fig. 5 shows one specific example of the MIR used in this embodiment. As shown in the figure, the MIR 412 in this embodiment is a storage area consisting of server availability flags 510-513, a master role server number register 520, a master snapshot register 530, and a master role change request doorbell 540, and is formed in the I/O switch 110.

Each of the server availability flags 510-513 shows whether the each server is available. For example, the server availability flag 510 shows availability of the server 150A (server number #0). Incidentally, when the server availability flag 510 is unity, it shows that the server is available, and when the flag is zero, it shows that the server is unavailable. The initial value immediately after a power supply is turned on is zero. The servers 150A-C set the server availability flags 510-513 corresponding to respective servers to unity after being activated. Moreover, before the server becomes unavailable because of shutdown etc., the server availability flag is cleared to zero. If a failure occurs in the server 150A-C and it becomes unavailable, the server that detected the failure or a managerial system not illustrated clears the server availability flag 510-513 to zero.

For example, if after the MS-PF driver operating in the slave mode issued a request of the setting etc. to the MS-PF driver operating in the master mode via the MSMB 111, a response does not return within a fixed time, it will be regarded that a failure occurs in the server corresponding to the MS-PF driver operating in the master mode as timeout. At this time, the MS-PF driver that detected the timeout clears the server availability flag 510-513 corresponding to the server to zero. After that, since the master role server becomes absent, the MS-PF driver notifies all the operating servers of necessity of changing the master role server.

The master role server number register 520 in the MIR 412 of Fig. 5 is a register indicating a server number of the server in which the MS-PF driver is operating in the master mode. As described above, a server that can use the master side register 310 of the MSMB 111 is only the server that is shown by the master role server number 520 as explained in Fig. 2. Moreover, the server that newly holds the master role by the change of the master role server writes its server number in the master role server number register 520. Furthermore, when a value is written in the master role server number register 520, an interrupt indicating that the master role server has changed is enabled to all the servers 150A-C (hereinafter, this interrupt being designated as a "master role change completion interrupt").

The master snapshot register 530 serving as a master snapshot storage area is a register for storing an internal state of the MS-PF driver operating in the master mode in order to change the master role server in the event of a server failure. The MS-PF driver operating in the master mode operates to store an internal state in the master snapshot register 530 at any time. If a storing frequency is high, it will become a factor of lowering performance of the system, but on the other hand, restoration possibility in the event of failure occurrence will increase.

The master role change request doorbell 540 is used in order to enable an interrupt indicating that the master role server needs to be changed (hereinafter, this interrupt being designated as a "master role change request interrupt") to all the servers 150A-C by the readout.

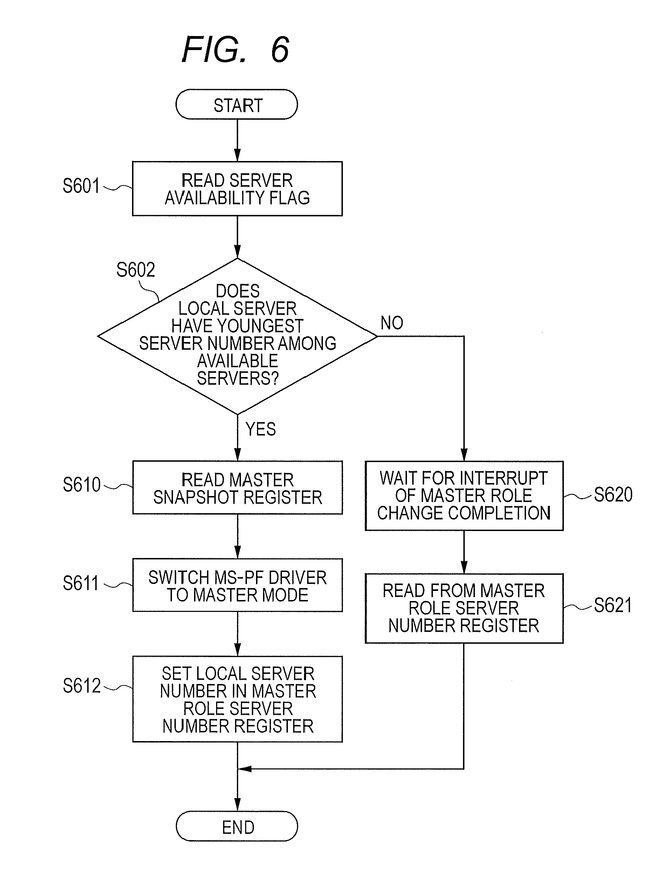

Fig. 6 shows a processing procedure that, when the server holding the master role fails, the remaining servers must perform as a flowchart. The procedure shown in the flowchart of Fig. 6 is started being triggered by having detected that the master role server broke down, or by the master role change request interrupt.

At Step S601, the server availability flags 510-513 are read. At Step S602, based on results read at Step S601, it is determined whether a local server is a server having the youngest server number among the servers that are available.

If, as a result of the determination at Step S602, the local server is the server having the youngest server number, the local server will take over the master role by making the MS-PF driver of the local server operate in the master mode. A procedure for that corresponds to Steps S610 to S612.

On the other hand, if the local server is not a server having the youngest server number, it continues to operate in the slave mode. However, since issuing a request to the MS-PF driver of the master role server using the MSMB 111 should be refrained from until the change of the master role server is completed, it is necessary to wait until the change is completed. A procedure for that is Steps S620 to S621.

At Step S610, the content of the master snapshot register 530 is read to acquire the internal state of the MS-PF driver that has held the master role until now, i.e., the MS-PF driver on the server in which a failure occurred.

At Step S611, the MS-PF driver of the local server is changed to be in the master mode. When doing this, the processing being in progress is taken over using the internal state acquired at Step S610.

At Step S612, the server number of the local server is written in the master role server number register 520. In connection with this, the master role change completion interrupt is enabled to other servers. The other servers are waiting for the master role change completion interrupt at Step S620 as will be described later.

The server that continues to be in the slave mode waits for the master role change completion interrupt from the new master role server at Step S620. Then, after receiving the master role change completion interrupt, the master role server number register 520 is read at Step S621 to check which server holds the master role.

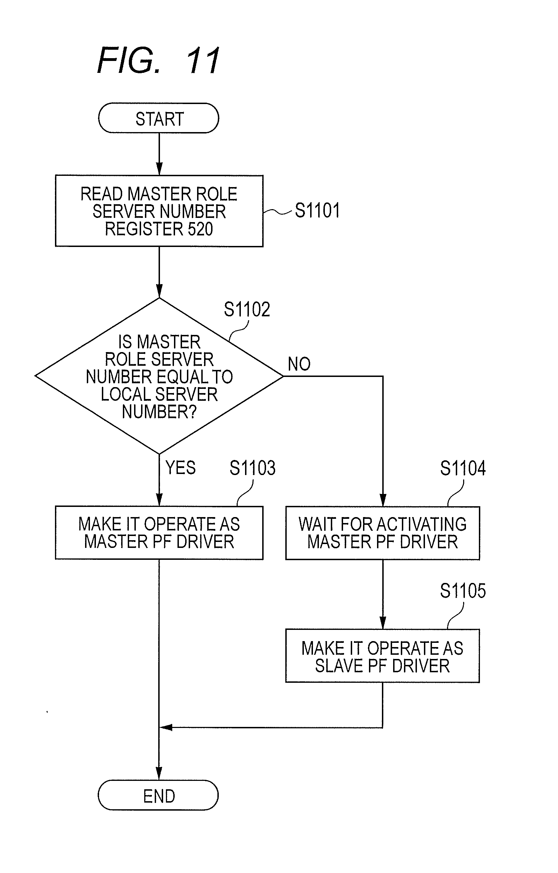

Based on a flowchart of Fig. 11, one example of a specific operation of the MS-PF driver 462A-C in each server will be explained. When being activated, the MS-PF driver 462A-C reads the master role server number register 520 of the MIR 412 to find the server number of a server which should hold the master role at Step S1101.

Next, at Step S1102, the MS-PF driver 462A-C compares the server number of the server (the local server number) on which it is operating and the master role server number being read at Step S1101. If a comparison result is Yes, it performs the same operation as that of the master PF driver 122 shown in Fig. 9 at Step S1103. However, even when the MS-PF driver 462A-C operates as the master PF driver, it operates on the hypervisor 161A-C of the server 150A-C. Therefore, at Step S906, the MS-PF driver 462A-C accepts the request from the hypervisor 161A-C of the server on which it is operating, not from the I/O controller 120, using the API. This API is the same as what is used between the slave PF driver 162A-C and the hypervisor 161A-C.

If at Step S1102, the local server number and the master role server number do not agree, the local server should operate as the slave PF driver 162A-C. For that purpose, first, at Step S1104, the MS-PF driver 462A-C checks whether the MS-PF driver that holds the master role has already been activated and has started an operation as the master PF driver. This check can be performed by inspecting the server availability flag 510-513 corresponding to the server indicated by the master role server number register 520. Moreover, it is all right to make a pseudo request to the master PF driver using the MSMB 111 and to determine by checking whether there is a response to it.

After checking that the master role server is operating at Step S1104, the MS-PF driver 462A-C performs an operation as the slave PF driver like Fig. 10 at Step S1105.

Also in the second embodiment explained above, by introducing the new configurations to the PF driver and the I/O switch, it is possible to suppress the necessity of modifying the hypervisor, the introduction cost, or the operation and management cost, and is also possible to attain higher reliability by a redundant configuration.

### Third Embodiment

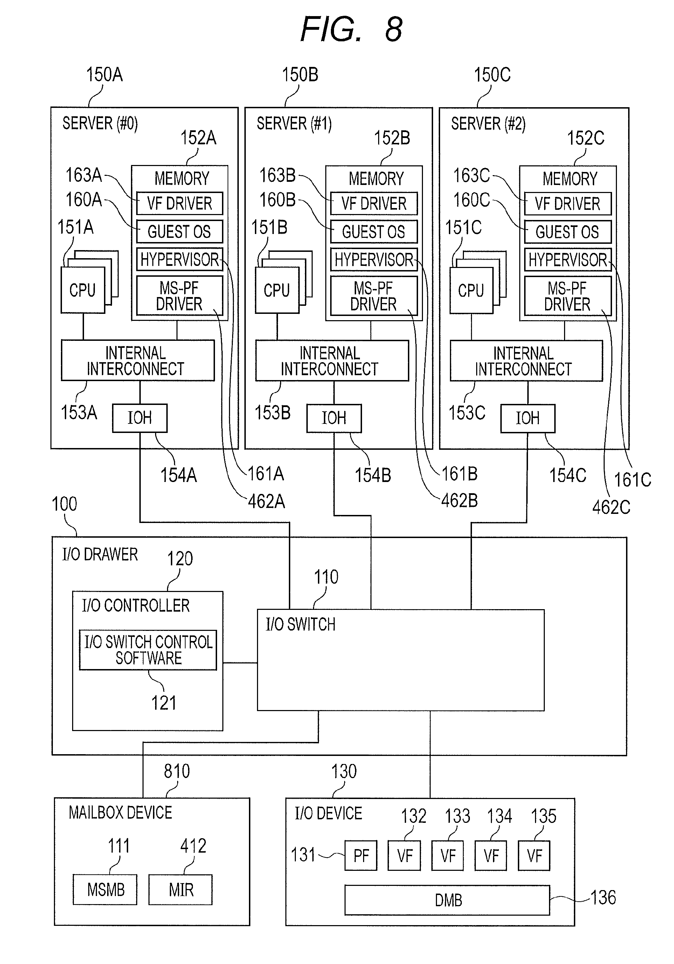

Fig. 8 is a diagram showing a general configuration of a computer system according to a third embodiment. The computer system of this embodiment represents an embodiment that is different from the configuration of the first embodiment of Fig. 1 and the configuration of the second embodiment of Fig. 4 with respect to the MSMB 111 and the MIR 412 in the I/O switch 110.

Generally, since the I/O switch is not only shared by multiple servers of the SR-IOV device but also widely used in the computer systems, may kinds of LSI's of the I/O switch are already on the market. However, with the configuration of the embodiment described above, since the MSMB 111 and also the MIR 412 are provided in the I/O switch 110, any existing I/O switch commercially available cannot be diverted as it is.

So, the third embodiment is configured so that the MSMB 111 and also the MIR 412 are not provided in the I/O switch 110, but are provided outside the I/O switch 110 as a mailbox device 810. The MSMB 111 and the MIR 412 in this mailbox device 810 are accessed via the I/O switch 110. Incidentally, although in the computer system of Fig. 8, it is illustrated as a configuration in which the mailbox with the MSMB 111 and the MIR 412 built therein should be provided outside the I/O drawer 100, since what is necessary is just to provide it outside the I/O switch 110, it is naturally all right to install it in the interior of the I/O drawer 100.

The configuration of this embodiment enables an existing product to be diverted for the I/O switch 110, and what is necessary to do is just to newly develop only the mailbox device 810. Moreover, since the mailbox device 810 is a simple device that contains at least one of the MSMB 111 and the MIR 412 and has storage areas, such as a flag and a register, it can be realized using the FPGA etc.

In the foregoing, although the present invention was concretely explained based on various embodiments, it is needless to say that the present invention is not limited to the forms of the embodiments described above, and can be modified within a scope not departing from the purport thereof.

The present invention relates to the blade server or computer system equipped with multiple computers, and is especially useful as a technology whereby a single I/O device is shared by the computers.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A computer system having a plurality of servers each for using one or more I/O devices through an I/O drawer,
wherein the I/O drawer has an I/O switch for connecting the servers and the I/O device, and an I/O controller for controlling the I/O device,
wherein the I/O device has at least one or more physical functions (hereinafter referred to as PF's),
wherein any one of the servers or the I/O controller has a master PF driver for accessing the PF,
wherein the servers except the server having the master PF driver have respective slave PF drivers,
wherein the slave PF driver transfers a request to the master PF driver in order to use the PF, and
wherein the master PF driver that received the request accesses the PF.

2. The computer system according to claim 1,
wherein the I/O switch has a mailbox accessible from the master PF driver and the slave PF driver,
wherein the slave PF driver writes the request to the master PF driver in the mailbox, and
wherein the master PF driver reads the request written by the slave PF driver from the mailbox and accesses the PF of the I/O device.

3. The computer system according to claim 1 or 2,
wherein the master PF driver and the slave PF driver are each made up of a dual-purpose master/slave PF driver (hereinafter referred to as an MS-PF driver),
wherein the MS-PF driver operates in the master mode in which it operates as the master PF driver or in the slave mode in which it operates as the slave PF driver,
wherein the I/O switch has a mailbox accessible from the MS-PF drivers,
wherein the MS driver operating in the slave mode writes a request destined to the MS-PF driver operating in the master mode in the mailbox, and
wherein the MS-PF driver operating in the master mode reads the request written in the mailbox and accesses the PF of the I/O device according to the request being read.

4. The computer system according to claim 3,
wherein the I/O switch has a master role decision area for retaining an identifier of the server having the MS-PF driver operating in the master mode, and
wherein the MS-PF driver operating in the slave mode reads the master role server decision area and recognizes the server having the MS-PF driver operating in the master mode.

5. The computer system according to claim 4,
wherein the master role server decision area in the I/O switch stores the server availability flag for retaining availabilities of the servers, and
wherein the MS-PF server operating in the slave mode reads the server availability flag and recognizes a server identifier of the server that is available when a failure occurs in the server having the MS-PF driver operating in the master mode.

6. The computer system according to at least one of claims 1 to 5, further comprising:
a mailbox device equipped with a mailbox that is accessible from the master PF driver and the slave PF drive,
wherein the slave PF driver writes the request to the master PF driver in the mailbox, and
wherein the master PF driver reads the request written by the slave PF drive and accesses the PF of the I/O device.

7. An I/O device control method of a computer system that has a plurality of servers using the I/O device, an I/O switch for connecting the servers and the I/O device, and an I/O controller for managing the I/O switch,
wherein the I/O device has at least one or more physical functions (hereinafter each being referred to as a "PF"),
wherein any one of the servers or the I/O controller has a master PF driver for accessing the PF,
wherein the servers except the server having the master PF driver have respective slave PF drivers,
wherein the slave PF driver transfers a request to the master PF driver in order to use the PF, and
wherein the master PF driver having received the request accesses the PF.

8. The I/O device control method according to claim 7,
wherein the master PF driver and the slave PF driver are each made up of a dual-purpose master/slave PF driver (hereinafter referred to as an "MS-PF driver"),
wherein the MS-PF driver operates in a master mode in which it operates as the master PF driver or in a slave mode in which it operates as the slave PF driver,
wherein the I/O switch has a mailbox accessible from the MS-PF drivers,
wherein the MS-PF driver operating in the slave mode writes the request destined to the MS-PF driver operating in the master mode in the mailbox, and
wherein the MS-PF driver operating in the master mode reads the request written in the mailbox and accesses the PF of the I/O device.

9. The I/O device control method according to claim 8,
wherein the I/O switch has a master role decision area for retaining an identifier of the server having the MS-PF driver operating in the master mode, and
wherein the MS-PF driver operating in the slave mode reads the master role server decision area and recognizes the server having the MS-PF driver operating in the master mode.

10. The I/O device control method according to claim 9,
wherein server availability flags for retaining availabilities of the servers are stored in the master role server decision area in the I/O switch, and
wherein the MS-PF driver operating in the slave mode reads the server availability flag and recognizes a server identifier of the server that is available when detecting that a failure occurs in the server having the MS-PF driver operating in the master mode.

11. The I/O device control method according to claim 9 or 10,
wherein the dual-purpose master/slave driver judges whether the MS-PF driver should be switched to the master mode based on a server identifier of the server that is available.

12. The I/O device control method according to claim 11,
wherein the I/O switch has a master snapshot storage area for storing an internal state of the MS-PF driver operating in the master mode, and
wherein the MS-PF driver operating in the master mode writes the internal state in the master snapshot storage area periodically or in the event of failure occurrence.

13. An I/O drawer that enables a plurality of servers to use one or more I/O devices, comprising:
an I/O switch for connecting the servers and the I/O device; and
an I/O controller for managing the I/O switch,
wherein the I/O switch has a mailbox that is accessible from the servers and the I/O controller.

14. The I/O drawer according to claim 13,
wherein the I/O device has at least one or more physical functions (hereinafter, each being referred to as a "PF"),
wherein the PF driver for accessing the PF consists of a master PF driver that is provided to any one of the servers or the I/O controller and a slave PF driver that is provided to the servers except the server having the master PF driver, and
wherein a request from the slave driver for using the PF from which the request is read by the master PF driver is written in the mailbox.

15. The I/O drawer according to claim 13 or 14,
wherein the mailbox is formed in a mailbox device installed outside the I/O switch, and
wherein the servers and the I/O controller access the mailbox formed in the mailbox device.

16. The computer system according to at least one of claims 1 to 6, wherein the I/O drawer is the I/O drawer according to at least one of claims 13 to 15.
